# FASCICULE DE BREVET EUROPEEN

(11) **EP 2 429 445 B1**
(45) Date de publication et mention de la délivrance du brevet: **24.07.2013**
(21) Numéro de dépôt: 10721410.8
(22) Date de dépôt: 07.05.2010
(51) Int. Cl.: A61C 5/02

(54) **INSTRUMENT ENDODONTIQUE PRÉSENTANT UNE ARÊTE AYANT UNE SÉRIE DE RELIEFS**
ENDODONTISCHES INSTRUMENT MIT EINER KANTE MIT EINER REIHE VON ERHABENEN MUSTERN
ENDODONTIC INSTRUMENT HAVING ONE EDGE WITH A SERIES OF RAISED PATTERNS

(30) Priorité: 14.05.2009 FR 0902327
(43) Date de publication de la demande: 21.03.2012
(73) Titulaire: Neolix SAS, 53001 Laval (FR)
(72) Inventeur: PERNOT, Jacques, F-25870 Vieilley (FR); EUVRARD, Hubert, 25000 Besancon (FR)
(74) Mandataire: Saint-Marc-Etienne, Christophe Andréas
(86) Numéro de dépôt international: PCT/EP2010/056235
(87) Numéro de publication internationale: WO 2010/130642

(56) Documents cités:
- US-A- 1 813 741
- US-A- 4 019 254
- US-A- 4 284 406
- US-A- 5 842 862
- US-A1- 2003 068 597
- US-A1- 2007 166 664

## Description

Le domaine de l'invention est celui de la conception et de la fabrication d'instruments pour pratiquer des soins dentaires. Plus précisément, l'invention concerne les instruments endodontiques, utilisés pour réaliser un canal dans une dent.

Lorsqu'une dent est affectée par une carie profonde, il est parfois nécessaire de dévitaliser la dent. Pour ce faire, il faut retirer de la dent et de la racine de la dent des tissus infectés, et mettre en forme un canal destiné à être obturé par une matière constituant de la Gutta ou autre pâte d'obturation canalaire.

Pour réaliser ces opérations, on utilise des instruments endodontiques qui s'apparentent à des forets de petits diamètres et qui permettent de percer et/ou découper la dentine de la dent pour mettre en forme le canal destiné à recevoir de la Gutta ou autre pâte d'obturation canalaire.

Ce traitement est donc réalisé de manière manuelle ou mécanisée et des instruments endodontiques sont, lors de leur conception, prévus pour présenter une dureté suffisante pour traverser la dentine qui est un matériau mi-dur, tout en présentant un certain degré de souplesse pour pouvoir prendre la forme interne de la racine de la dent.

A cette fin, il est proposé depuis plusieurs années des instruments endodontiques réalisés en acier inoxydable ou en un alliage de nickel et de titane.

De façon générale, les instruments endodontiques actuels sont fabriqués à partir d'une tige cylindrique sur laquelle une ou plusieurs découpes hélicoïdales sont taillées, traditionnellement par un procédé de meulage. Les surfaces de découpe génèrent à leur intersection une arête.

Actuellement, les arêtes des instruments endodontiques sont linéaires et continues, une telle arête constituant alors un tranchant continu et lisse.

De tels instruments nécessitent une grande vigilance et une dextérité précises de la part du praticien. En effet, avec les instruments endodontiques pourvus d'un tranchant continu et lisse classique, deux phénomènes opposés peuvent survenir :
- soit l'arête de l'instrument endodontique glisse sur la matière de la dentine ;
- soit l'arête de l'instrument endodontique s'engage trop rapidement dans la matière de la dentine, ce qui conduit à un phénomène désigné par le terme de « survissage », à l'issue duquel l'instrument se coince dans la matière.

Dans les deux cas, l'usinage du canal ne s'opère pas correctement, voire ne se réalise pas du tout.

Il est à noter que dans le cas où l'instrument endodontique se coince dans la matière, il est fréquent que celui-ci vienne à casser. Or, la casse répétée d'instruments endodontiques se traduit par des coûts d'exploitation relativement importants pour le praticien.
Le document US 4019254 A décrit un instrument endodontique ayant des particules abrasives entre deux arêtes voisines.
Le document US 5 842 862 B décrit un instrument endodontiques ayant des encoches lelong de ses arêtes de coupe.

L'invention a notamment pour objectif de pallier ces inconvénients de l'art antérieur.

Plus précisément, l'invention a pour objectif de proposer un instrument endodontique qui soit plus efficace que ceux de l'art antérieur, et qui soit plus simple à utiliser pour le praticien.

L'invention a également pour objectif de fournir un tel instrument endodontique qui permette au praticien d'envisager des gains d'exploitation.

Ces objectifs, ainsi que d'autres qui apparaîtront par la suite, sont atteints grâce à l'invention qui a pour objet un instrument de chirurgie dentaire en particulier endodontique du type présentant une base à partir de laquelle s'étend au moins une arête à l'intersection de deux surfaces de découpe, caractérisé en ce que au moins une desdites surfaces de découpe présente une pluralité de stries s'étendant transversalement entre deux arêtes sur toutes la longueur entre deux arêtes voisines.

Ainsi, grâce à l'invention, on obtient un instrument endodontique dans lequel les stries confèrent à l'instrument une action plus efficace sur la matière de la dent, évitant à l'instrument de glisser sur la dentine ou de se coincer dans celle-ci.

En effet, les stries de l'instrument endodontique engendrent un usinage qui s'apparente plus à un « grattage » ou à un fraisage, en comparaison de l'action des instruments endodontiques classiques qui s'apparentent à une simple découpe.

Un instrument selon l'invention s'utilise donc plus simplement dans la mesure où il évite de par sa conception les inconvénients des instruments de l'art antérieur. Le praticien peut donc opérer l'usinage de la dentine sans préoccupation particulière.

De plus, le risque que l'instrument se coince dans la dentine étant supprimé, on limite les phénomènes de casse des instruments endodontiques. Il en résulte des gains d'exploitation pour le praticien.

Un instrument de chirurgie dentaire selon l'invention peut présenter l'une ou plusieurs des caractéristiques suivantes :
- lesdites stries présentent une largeur comprise entre 0,01mm et 1 mm.
- lesdites stries présentent une profondeur comprise entre 0,01mm et 1mm.
- lesdites stries sont espacées entre elles d'une distance comprise entre 0,1mm et 30mm.
- lesdites stries présentent sur leur longueur des caractéristiques évolutives de forme et/ou de profondeur et/ou de largeur.
- au moins une desdites surfaces de découpe présente des stries croisées.

Selon un mode de réalisation avantageux, ladite ou lesdites arêtes présentent également une série de reliefs.

Selon une solution particulière, les surfaces de découpe présentent chacune la forme d'une torsade ondulante.

Les surfaces de découpe peuvent ainsi présenter un relief principal (les ondulations) et un relief secondaire (les stries) qui se combinent pour optimiser l'action de l'instrument sur la dentine.

De cette façon, on augmente l'action apparentée à un fraisage de l'instrument endodontique sur la dentine.

Selon une première variante de réalisation, l'instrument endodontique présente deux paires de surfaces de découpe s'étendant selon une trajectoire hélicoïdale, voire trois paires de surfaces de découpe, s'étendant selon une trajectoire hélicoïdale.

Selon un mode de réalisation avantageux, l'instrument endodontique selon l'invention est réalisé en un alliage nickel/titane.

Par ailleurs, un instrument endodontique selon l'invention est avantageusement réalisé par un procédé d'électro-érosion.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- les figures 1 et 2 sont des vues en perspective d'un instrument endodontique selon un premier mode de réalisation de l'invention :
- la figure 3 est une vue de côté d'un instrument endodontique selon un deuxième mode de réalisation de l'invention ;
- la figure 4 est une vue de détail de l'extrémité d'un instrument endodontique selon l'invention ;
- les figures- 5 et 6 sont des vues d'un deuxième mode de réalisation d'un instrument endodontique selon l'invention ;
- les figures 7 et 8 sont des vues d'un troisième mode de réalisation d'un instrument endodontique selon l'invention ;
- les figures 9 et 10 sont des vues d'un quatrième mode de réalisation d'un instrument endodontique selon l'invention ;
- les figures 11 et 12 sont des vues d'un cinquième mode de réalisation d'un instrument endodontique selon l'invention ;
- les figures 13 et 14 sont des vues d'un sixième mode de réalisation d'un instrument endodontique selon l'invention ;
- les figures 15 et 16 sont des vues d'un septième mode de réalisation d'un instrument endodontique selon l'invention ;
- les figures 17 et 18 sont des vues d'un huitième mode de réalisation d'un instrument endodontique selon l'invention ;
- les figures 19 et 20 sont des vues d'un neuvième mode de réalisation d'un instrument endodontique selon l'invention.

Tel qu'indiqué précédemment, le principe de l'invention réside dans le fait de proposer un instrument endodontique dont une ou plusieurs surfaces de découpe présentent une série de reliefs constitués par une pluralité de stries.

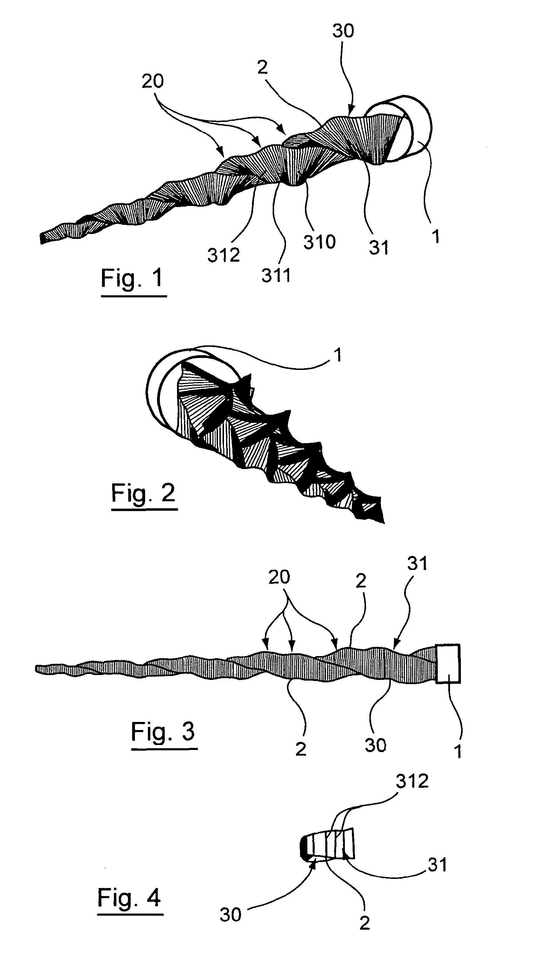

En référence aux figures 1 à 3, un instrument endodontique selon l'invention comprend une base 1 pouvant constituer un organe d'assemblage pour monter l'instrument endodontique sur un embout d'un outil mécanisé ou manuel.

Un instrument endodontique selon l'invention est réalisé à partir d'une tige métallique, et plus précisément à partir d'une tige réalisée en un alliage de nickel et de titane, usinée par une technique d'électro-érosion.

Le fil d'électro-érosion utilisé est déplacé selon une combinaison de déplacements longitudinaux et transversaux par rapport à l'axe longitudinal de l'instrument endodontique de façon à générer les surfaces de découpe 30, 31, entraînant à leur intersection l'apparition d'une arête 2 présentant une série de reliefs.

Selon le présent mode de réalisation, les reliefs des arêtes 2 de l'instrument prennent la forme d'ondulations 20, plus ou moins régulières.

Il est à noter que les reliefs de l'arête 2 peuvent, selon un autre mode de réalisation envisageable, prendre la forme de dentures, l'arête correspondante étant alors ciselée.

Par ailleurs, selon le principe de l'invention, les surfaces de découpe 30, 31 présentent également, elles-mêmes une série de reliefs. En effet, les surfaces de découpe 30, 31 prennent la forme de surfaces ondulantes, alternant des parties convexes 310 avec des parties concaves 311, à la façon d'une torsade ondulante.

De plus, sur la surface ondulante des surfaces de découpe sont réalisées des stries 312 (apparaissant plus clairement sur la figure 4), qui s'étendent transversalement entre deux arêtes 2 par rapport à l'axe longitudinal de l'instrument endodontique.

Un instrument endodontique selon l'invention peut comprendre deux paires de surfaces de découpe 30, 31 s'étendant chacune selon une trajectoire hélicoïdale et s'entrecroisant l'une par rapport à l'autre tel qu'illustré par les figures 1 à 3. Il est également possible, selon une variante envisageable, de prévoir trois paires de surfaces de découpe s'étendant chacune selon une trajectoire hélicoïdale et s'entrecroisant les unes par rapport aux autres.

Dans le mode de réalisation qui vient d'être décrit, ainsi que, de façon générale, dans tous les modes de réalisation envisageables dans le cadre de la présente invention, et notamment ceux décrits par la suite, les stries des surfaces de découpe présentent les caractéristiques dimensionnelles suivantes :
- les stries présentent une largeur comprise entre 0,01mm et 1 mm ;
- les stries présentent une profondeur comprises entre 0,01 et 1 mm;
- les stries sont espacées entre elles d'une distance comprise entre 0,1 mm et 30 mm, les stries pouvant toutefois, selon une alternative envisageable, être directement adjacentes les unes aux autres.

On note toutefois que les stries peuvent présenter des caractéristiques dimensionnelles non constantes sur toute la distance entre deux arêtes de coupe 2. Ainsi, les stries peuvent présenter sur leur longueur des caractéristiques évolutives de forme et/ou de profondeur et/ou de largeur. De plus, les stries peuvent s'étendre sur une partie seulement de la distance entre deux arêtes. Les stries peuvent en outre être complètes ou partielles sur la même surface de découpe, éventuellement de manière alternée, par séries de une ou plusieurs stries.

Les stries peuvent être prévues sur une seule face, plusieurs des faces ou toutes les faces. Dans le cas où elles s'étendent sur plusieurs des surfaces de découpe, une alternance peut être prévue : les stries s'étendent par exemple sur une surface de découpe sur deux.

On décrit ici après différents modes de réalisation de l'invention, présentant chacun des caractéristiques qui peuvent être combinés d'un mode de réalisation à l'autre.

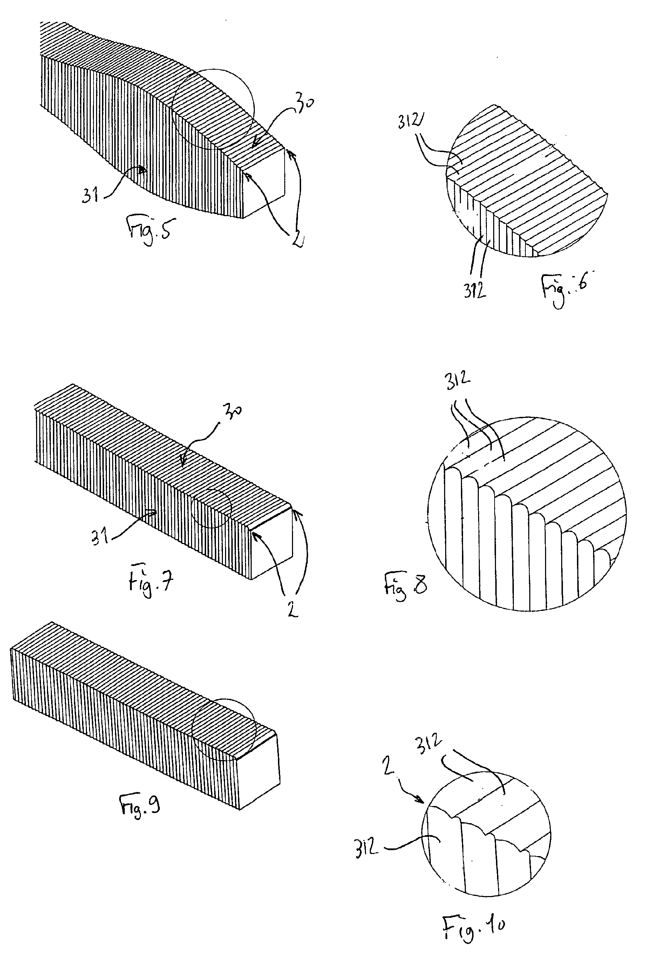

Selon le mode de réalisation illustré par les figures 5 et 6, les arêtes de découpe 2, à l'intersection de surface de découpe 30, 31 sont ondulantes. De plus, les stries 312 prennent une forme concave et s'étendent selon une direction perpendiculaire à l'arête de coupe 2, ceci sur chaque surface de découpe 30, 31. On note que, selon le mode de réalisation illustré par les figures 5 et 6, les stries 312 de la surface de découpe 31 s'étendent dans l'alignement et le prolongement des stries 312 de la surface de découpe 30.

Tel qu'indiqué précédemment, les stries illustrées par les figures 5 et 6 sont concaves.

Selon le mode de réalisation illustré par les figures 7 et 8, les stries 312 peuvent présenter une section de forme convexe.

Dans l'un ou l'autre de ces deux cas, la forme de la strie, en profondeur ou en crête peut être en U ou en V, ou de forme carrée ou rectangulaire, ou de toute autre forme symétrique ou asymétrique, régulière ou irrégulière, selon la géométrie et les mouvements de la pièce et de l'outil de fabrication envisagé.

Tel que cela apparaît sur les figures 7 et 8, les stries s'étendent à nouveau dans le prolongement et dans l'alignement les unes des autres.

En revanche, selon le mode de réalisation illustré par les figures 9 et 10, les stries 312 d'une des surfaces de découpe ne sont pas dans l'alignement et le prolongement des stries de la surface de découpe adjacente. Au contraire, les stries 312 d'une surface de découpe sont légèrement décalées en alignement par rapport aux stries 312 de la surface de découpe adjacente. Une disposition en quinconce des stries d'une des surfaces de découpe par rapport aux stries de la surface de découpe adjacente peut aussi être envisagée.

On note que selon le mode de réalisation illustré par les figures 9 et 10, une alternance de forme entre les stries d'une surface de découpe et celles de la surface de découpe adjacente peut également être envisagée. Selon le présent mode de réalisation illustré par la figure 9 et 10, les stries d'une surface de découpe présentent une section de forme concave tandis que les stries de la surface de découpe adjacente présente une forme convexe. Dans ce cas, l'arête 2 à l'intersection des deux surfaces de découpes adjacentes présente une forme ciselée en conséquence.

Dans les modes de réalisations qui viennent d'être décrits en référence aux figures 5 à 10, les stries s'étendent perpendiculairement aux arêtes de découpe 2.

Une autre disposition peut toutefois être envisagée.

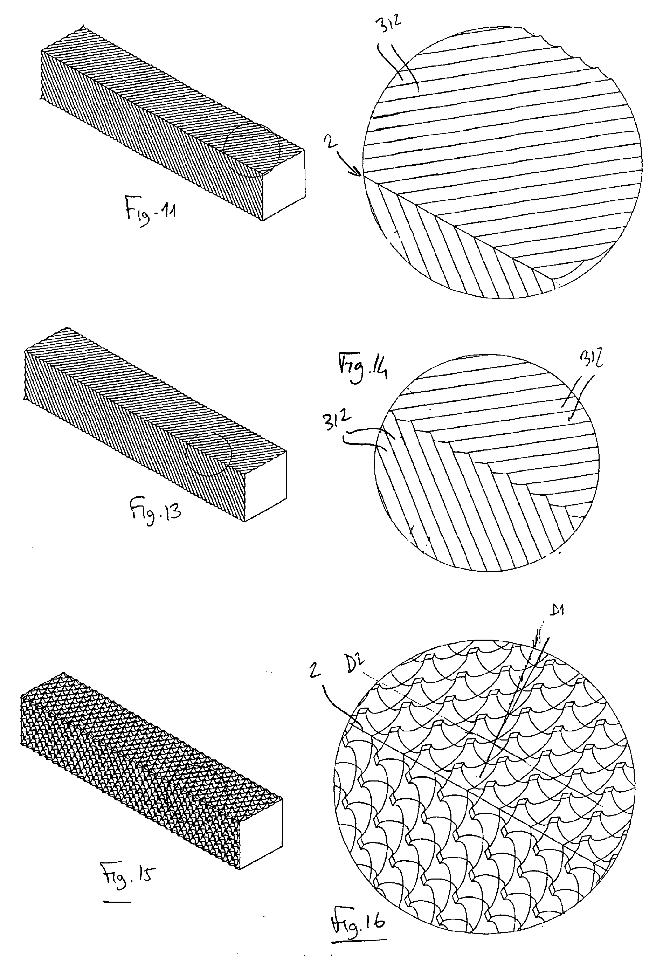

Selon le mode de réalisation illustré par les figures 11 et *12*, les stries, présentant en l'occurrence une section de forme concave, s'étendent selon une direction formant un angle de x° par rapport à l'arête de coupe 2 à l'intersection de deux surfaces de découpe adjacentes.

Selon le mode de réalisation illustré par ces figures 11 et 12, les stries d'une surface de découpe s'étendent dans le prolongement des stries d'une surface de découpe adjacente.

Selon une variante envisageable illustrée par les figures 13 et 14, les stries 312, dont la section présente en l'occurrence une forme concave, et étant orientée de x° par rapport à l'arête de coupe sur deux surfaces de découpe adjacentes, sont décalées les unes par rapport aux autres au niveau de l'arête de découpe et s'étendent en l'occurrence en quinconce entre deux surfaces de découpe adjacentes.

On note en référence aux différents modes de réalisation qui viennent d'être décrits, que les stries peuvent présenter, sur une même surface de découpe, différentes orientations : perpendiculaire à l'arête à l'intersection de deux surfaces de découpe, ou oblique à gauche par rapport à cette arête, ou encore oblique à droite par rapport à cette arête.

De plus, une même strie peut présenter sur sa longueur différentes orientation, à savoir perpendiculaire, oblique à gauche ou oblique à droite par rapport aux arêtes de coupe entre lesquelles elle s'étend. En outre, des stries de longueur partielle (c'est-à-dire ne rejoignant pas deux arêtes de coupe adjacente), peuvent présenter des orientations différentes en se succédant d'un côté à l'autre une surface de découpe de manière continue ou discontinue.

Il est noter également que les stries peuvent se présenter sous forme de traits pointillés, ou de traits mixtes, avec des traits de longueur constante ou variable.

Selon encore une autre variante envisageable, les stries peuvent présenter sur tout ou partie de leur longueur une forme en arc de cercle.

Selon encore un autre mode de réalisation envisageable, au moins une des surfaces de découpe de l'instrument présente des stries croisées.

Ceci est illustré par les figures 15 et 16 qui montrent des surfaces de découpe présentant des stries croisées, en l'occurrence présentant une section de forme concave dont certaines s'étendent selon une direction D1 et d'autres selon une direction D2 formant un angle non nul avec la direction D1.

Selon ce mode de réalisation, les stries sont orientées sur une surface de découpe selon un angle de 30° (qui peut être adapté autant que de besoins) par rapport à l'arête 2, tandis que les stries de la surface de découpe adjacente présente une orientation formant un angle de 30° à droite par rapport à la même arête 2.

On note que, tel que cela apparaît sur la figure 16 la direction D2 est parallèle à l'arête 2. Une autre orientation est toutefois envisageable.

On note également que les stries s'étendent sur toute la longueur entre deux arêtes voisines et qu'elles peuvent s'étendre selon différentes orientations envisageables, avec différentes formes. En particulier, des stries peuvent s'étendre selon deux orientations distinctes, ou plus, ceci sur la même surface de découpe, pou dessiner des motifs d'intersection appartenant notamment au groupe suivant :
- -X;
- -λ;
- -κ;
- 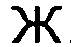 .

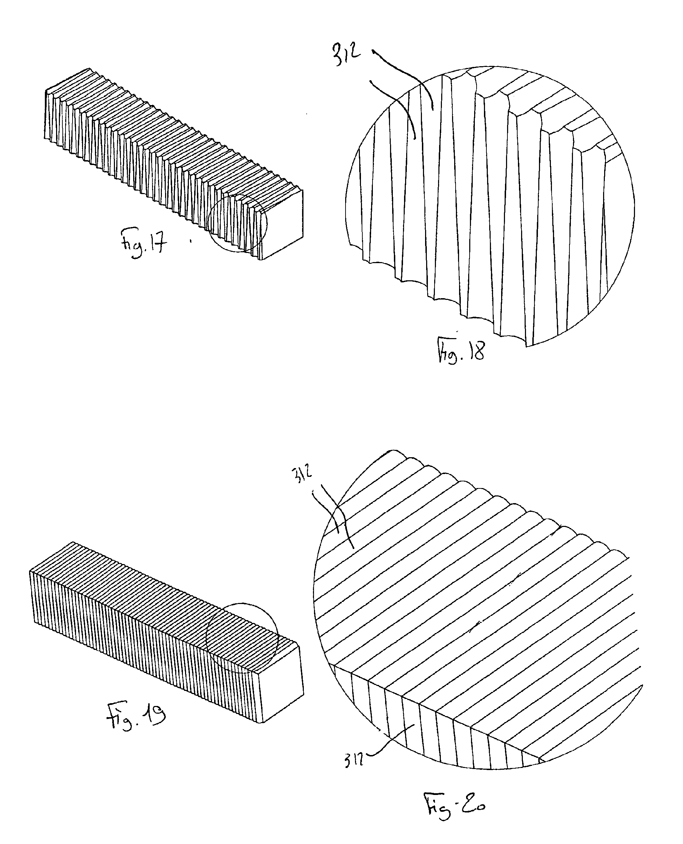

Les figures 17 et 18 illustrent encore un autre mode de réalisation de l'invention dans lequel les stries présentant une section en forme de creux s'étendent perpendiculairement à l'arête de coupe. Les stries d'une même surface de découpe présentent une alternance de telle sorte qu'une strie sur deux s'inscrivent entre ces deux extrémités dans un premier plan tandis que les autres stries de la même surface de découpe s'inscrivent entre leur deux extrémités dans un deuxième plan. Ces deux plans présentent l'un une orientation positive et l'autre une orientation positive par rapport à un troisième plan formant en quelque sorte le plan moyen de la surface de découpe correspondante. De plus, les stries ainsi constituées présentent une largeur évolutive.

Les figures 19 à 20 illustrent une variante de réalisation de l'instrument illustré par les figures 7 et 8. Tel qu'illustré par les figures 19 et 20, les stries 312 de chaque surface de découpe présentent une section de forme convexe et s'étendent dans le prolongement et l'alignement les unes des autres d'une surface de découpe à l'autre.

De façon générale, on note que les stries d'un instrument endodontique selon l'invention peuvent en outre :
- être réalisées sur des instruments s'inscrivant dans une enveloppe droite, conique, sinusoïdale présentant des surfaces linéaires ou non, ces surfaces pouvant selon un mode de réalisation particulier de l'invention être hélicoïdale ;
- être réalisées sur des surfaces de formes variées : courbes, planes, gauches... ;
- s'étendre entre des arêtes coupantes ou non, régulières ou présentant des motifs irréguliers, avec un angle positif, négatif ou neutre ;

- être prévues sur des instruments endodontiques de largeur ou de diamètre variable (0,05 à 5 mm), constant ou non sur la longueur de l'instrument, cette longueur pouvant être variable (de 5 à 65 mm par exemple) ;
- être prévues sur des instruments dont la section peut être constante ou non
- être prévues sur des instruments dont la pointe est travaillante ou non, cette pointe pouvant présenter des dimensions et/ou une forme adaptés en fonction des besoins ;
- être prévues sur des instruments manuels ou mécanisés ;
- être fabriquées en tout ou partie en acier, en alliage à base de nickel et de titane, de toute qualité et nuance de matériau ou alliage, ou fabriqué en tout autre matériau métallique ou plastique ;
- être prévues sur des instruments à usage rotatifs continus, rotatifs alternés, ou vibratoire, voire une combinaison de ces mouvements ou d'autres mouvements ;
- être réalisés sur des instruments ayant, ou non, subis un traitement de surface, avant ou après la réalisation des stries.

On précise en outre que toutes les formes mentionnées dans les différents modes de réalisation décrits précédemment peuvent être régulières ou irrégulières, et peuvent être combinées entre les différents modes de réalisation.

Préférentiellement, le procédé utilisé pour l'obtention des stries est l'électro-érosion à fil, tout autre procédé approprié pouvant cependant être utilisé.

Après usinage des stries sur les ébauches, les instruments peuvent subir une opération de vrillage.

## Revendications

1. Instrument de chirurgie dentaire en particulier endodontique du type présentant une base à partir de laquelle s'étend au moins une arête (2) à l'intersection de deux surfaces de découpe (30, 31),
**caractérisé en ce qu'**au moins une desdites surfaces de découpe (30, 31) présente une pluralité de stries (312) s'étendant transversalement entre deux arêtes (2) sur toute la longueur entre deux arêtes (2) voisines.

2. Instrument selon la revendication 1, **caractérisé en ce que** lesdites stries présentent une largeur comprise entre 0,01 mm et 1 mm.

3. Instrument selon la revendication 1, **caractérisé en ce que** lesdites stries présentent une profondeur comprise entre 0,01 mm et 1 mm.

4. Instrument selon la revendication 1, **caractérisé en ce que** lesdites stries sont espacées entre elles d'une distance comprise entre 0,1 mm et 30 mm.

5. Instrument selon la revendication 1, **caractérisé en ce que** lesdites stries présentent sur leur longueur des caractéristiques évolutives de forme et/ou de profondeur et/ou de largeur.

6. Instrument selon la revendication 1, **caractérisé en ce que** au moins une desdites surfaces de découpe présente des stries croisées.

7. Instrument selon l'une quelconque des revendications 1 à 6, **caractérisé en ce que** lesdites arêtes présentent également une série de reliefs.

8. Instrument endodontique selon la revendication 1, **caractérisé en ce que** les surfaces de découpe présentent chacune la forme d'une torsade ondulante.

9. Instrument endodontique selon l'une quelconque des revendications 1 à 8, **caractérisé en ce qu'**il présente deux voire trois paires de surfaces de découpe s'étendant selon une trajectoire hélicoïdale.

10. Instrument endodontique selon l'une quelconque des revendications 1 à 9, **caractérisé en ce qu'**il est réalisé en un alliage nickel/titane.

11. Instrument endodontique selon l'une quelconque des revendications 1 à 10, **caractérisé en ce qu'**il est réalisé par électro-érosion.

## Patentansprüche

1. Zahnchirurgisches, insbesondere endodontisches Instrument des Typs, welcher eine Basis aufweist, von der aus sich mindestens eine Kante (2) an der Schnittlinie von zwei Schneidflächen (30, 31) erstreckt,
**dadurch gekennzeichnet, dass** mindestens eine der Schneidflächen (30, 31) eine Vielzahl von Riefen (312) aufweist, die sich in Querrichtung zwischen zwei Kanten (2) über die gesamte Länge zwischen zwei benachbarten Kanten (2) erstrecken.

2. Instrument nach Anspruch 1, **dadurch gekennzeichnet, dass** die Riefen eine Breite zwischen 0,01 mm und 1 mm aufweisen.

3. Instrument nach Anspruch 1, **dadurch gekennzeichnet, dass** die Riefen eine Tiefe zwischen 0,01 mm und 1 mm aufweisen.

4. Instrument nach Anspruch 1, **dadurch gekennzeichnet, dass** die Riefen in einem Abstand voneinander angeordnet sind, der 0,1 mm bis 30 mm beträgt.

5. Instrument nach Anspruch 1, **dadurch gekennzeichnet, dass** die Riefen auf ihrer Länge sich ändernde Form- und/oder Breiten- und/oder Tiefenmerkmale aufweisen.

6. Instrument nach Anspruch 1, **dadurch gekennzeichnet, dass** mindestens eine der mindestens eine der Schneidflächen sich kreuzende Riefen aufweist.

7. Instrument nach einem der Ansprüche 1 bis 6, **dadurch gekennzeichnet, dass** die Kanten ebenfalls eine Reihe von erhabenen Mustern aufweisen.

8. Endodontisches Instrument nach Anspruch 1, **dadurch gekennzeichnet, dass** die Schneidflächen jeweils die Form einer welligen Kordel aufweisen.

9. Endodontisches Instrument nach einem der Ansprüche 1 bis 8, **dadurch gekennzeichnet, dass** es zwei oder sogar drei Paare von Schneidflächen aufweist, die sich entlang einer schraubenförmigen Trajektorie erstrecken.

10. Endodontisches Instrument nach einem der Ansprüche 1 bis 9, **dadurch gekennzeichnet, dass** es aus einer Nickel-Titan-Legierung hergestellt ist.

11. Endodontisches Instrument nach einem der Ansprüche 1 bis 10, **dadurch gekennzeichnet, dass** es durch Elektroerosion hergestellt ist.

## Claims

1. Instrument for dental, in particular endodontic, surgery, of the type having a base from which there extends at least one arris (2) at the intersection of two cutting surfaces (30, 31),
**characterised in that** at least one of the said cutting surfaces (30, 31) has a plurality of striations (132) which extend transversely between two arrises (2) over the entire length between two adjoining arrises (2).

2. Instrument according to claim 1, **characterised in that** the said striations (132) have a width of between 0.01 mm and 1 mm.

3. Instrument according to claim 1, **characterised in that** the said striations have a depth of between 0.01 mm and 1 mm.

4. Instrument according to claim 1, **characterised in that** the said striations are spaced apart from one another by a distance of between 0.1 mm and 30 mm.

5. Instrument according to claim 1, **characterised in that** the said striations have, over their length, evolutive shape and/or depth and/or width features.

6. Instrument according to claim 1, **characterised in that** at least one of the said cutting surfaces has crossed striations.

7. Instrument according to any of claims 1 to 6, **characterised in that** the said arrises also have a series of contours.

8. Endodontic instrument according to claim 1, **characterised in that** the cutting surfaces each have the shape of an undulating twisted cord.

9. Endodontic instrument according to any of claims 1 to 8, **characterised in that** it has two, or even three, pairs of cutting surfaces which extend along a helical path.

10. Endodontic instrument according to any of claims 1 to 9, **characterised in that** it is made of a nickel/titanium alloy.

11. Endodontic instrument according to any of claims 1 to 10, **characterised in that** it is produced by electro-erosion.
